# EUROPÄISCHE PATENTANMELDUNG

(11) **EP 1 160 688 A2**
(43) Veröffentlichungstag der Anmeldung: **05.12.2001**
(21) Anmeldenummer: 01112483.1
(22) Anmeldetag: 22.05.2001
(51) Int. Cl.: G06F 17/30

(54) **Verfahren und Vorrichtung zum automatischen Verknüpfen von Datensätzen aus zumindest einer Datenquelle sowie System zum Abrufen von verknüpften Datensätzen**

(30) Priorität: 22.05.2000 DE 10025219
(71) Anmelder: Weka Firmengruppe GmbH & Co. KG, 86438 Kissing (DE)
(72) Erfinder: Hölzl, Christoph, 86438 Kissing (DE); Klügl, Gerhard, 86316 Friedberg (DE); Mues, Michael, 86391 Stadtbergen (DE); Huss, Peter, 86573 Obergriesbach (DE)
(74) Vertreter: Müller-Boré & Partner Patentanwälte

(57) **Zusammenfassung**

Die vorliegende Erfindung betrifft ein Verfahren zum automatischen Verknüpfen von Datensätzen aus zumindest einer Datenquelle, welches folgende Schritte umfaßt:
Erfassen einer Vielzahl von Datensätzen aus zumindest einer Datenquelle;
Analysieren der erfaßten Datensätze anhand von innerhalb der Datensätze enthaltenen Daten zur Bestimmung zumindest einer Zuordnungsinformation;
Erzeugen zumindest einer Verknüpfungsinformation auf der Grundlage der Zuordnungsinformation; und
Ergänzen des Datensatzes um die zumindest eine Verknüpfungsinformation.

Weiterhin betrifft die Erfindung ein Computerprogrammprodukt und eine Vorrichtung zum automatischen Verknüpfen von Datensätzen aus zumindest einer Datenquelle sowie ein System zum Abrufen von verknüpften Datensätzen aus zumindest einer Datenquelle.

## Beschreibung

Die vorliegende Erfindung betrifft ein Verfahren, ein Computerprogrammprodukt und eine Vorrichtung zum automatischen Verknüpfen von Datensätzen aus zumindest einer Datenquelle sowie ein System zum Abrufen von verknüpften Datensätzen aus zumindest einer Datenquelle.

Es ist bekannt Informationen in Form von Datensätzen aus einer Informations- bzw. Datenquelle zu beschaffen. Hierfür wird unabhängig von den interessierenden Datensätzen bisher immer auf ein bestimmtes Medium bzw. auf eine bestimmte Datenquelle zugegriffen. Dieser Vorgang ist bei Fachbüchern, Zeitschriften, Journals, Nachschlagewerken, Softwarelösungen, Datenbanken, Internet, Intranet und Extranet gleichermaßen Stand der Informationsbeschaffung. Der Hersteller der Datenbank stellt durch redaktionelle Vorleistung Daten zu einer Information zusammen, die ein Konsument finden und weiterverarbeiten kann. Verweise auf weiterführende Informationen können durch verlegerische Kompetenz in oben genannten Medien durch Zitate bzw. Fußnoten gegeben werden. Diese Verweise setzen einen Informationssuchenden in die Lage, sich in weiteren Quellen wiederum eine Information für sein gesamtes Bedürfnis zu beschaffen.

Durch technische Lösungen ist dieser Beschaffungsvorgang von Daten schon verfeinert und optimiert worden. Es ist nunmehr z.B. möglich, in verschiedenen Datenquellen gleichzeitig zu recherchieren. Ein Beispiel für diese Möglichkeit sind die Metasuchmaschinen im Internet. Eine Suchanfrage wird gleichzeitig in mehreren Suchmaschinen abgesetzt und deren Ergebnisse gebündelt dargestellt. Der Benutzer muß allerdings jeden Treffer einzeln aufrufen, auswerten und z.T. selbständig die Relevanz zu seiner Suchanfrage interpretieren.

Dementsprechend sind nur zwei Möglichkeiten der Informations- bzw. Datenbeschaffung bekannt: einerseits durch Kombinieren der originären Daten zu einem größeren Informations- bzw. Datenpool und andererseits durch die Nutzung von gleichzeitig durchführbaren, jedoch voneinander unabhängigen technischen Datenbeschaffungsvorgängen.

Es ist Aufgabe der vorliegenden Erfindung, die Suche und Darstellung von Daten aus Datensätzen zu erleichtern.

Diese Aufgabe wird durch ein Verfahren zum automatischen Verknüpfen von Datensätzen aus zumindest einer Datenquelle gemäß Anspruch 1, durch ein Computerprogrammprodukt zum automatischen Verknüpfen von Datensätzen aus zumindest einer Datenquelle gemäß Anspruch 16 und durch eine Vorrichtung zum automatischen Verknüpfen von Datensätzen aus zumindest einer Datenquelle gemäß Anspruch 17 sowie durch ein System zum Abrufen von verknüpften Datensätzen aus zumindest einer Datenquelle gemäß Anspruch 18 gelöst. Bevorzugte Ausführungsformen der Erfindung sind Gegenstand der Unteransprüche.

Die Erfindung stellt ein Verfahren zum automatischen Verknüpfen von Datensätzen aus zumindest einer Datenquelle bereit, welches folgende Schritte umfaßt:
Erfassen bzw. Abrufen einer Vielzahl von Datensätzen aus zumindest einer Datenquelle;
Analysieren der erfaßten Datensätze anhand von innerhalb der Datensätze enthaltenen Daten bzw. Informationen zur Bestimmung zumindest einer Zuordnungsinformation;
Erzeugen zumindest einer Verknüpfungsinformation bzw. -verweis bzw. -befehl bzw. -datenbestandteil auf der Grundlage der Zuordnungsinformation; und
Ergänzen des Datensatzes um die zumindest eine Verknüpfungsinformation bzw. -verweis bzw. -befehl bzw. -datenbestandteil.

Somit ist eine neue Art der Datenaufbereitung dahingehend zur Verfügung gestellt, daß Datensätze aus zumindest einer Datenquelle miteinander verknüpft sind durch die Ergänzung eines jeden Datensatzes um zumindest eine Verknüpfungsinformation, so daß eine Art "Datensatzkette" einen leichten und schnellen Zugang zu den einzelnen Datensätzen für einen Benutzer ermöglicht, welcher lediglich die "Datensatzkette" durchsuchen bzw. sichten kann.

Bevorzugt brauchen hierbei die ursprünglich erfaßten Datensätze nicht in Ihrer Art und/oder Größe im wesentlichen verändert zu werden. Somit wird eine Verknüpfung von verschiedenen Datensätzen vorgenommen, welche bevorzugt ohne wesentlichen Datenverlust möglich ist. Es ist jedoch nicht notwendig, eine Integration der Datensätze aus verschiedenen Datenquellen im Sinne eines Datenbank-Hosts vorzunehmen, der mehr als einen Datenpool bzw. eine Datenquelle zur Verfügung stellt und den Benutzern die Möglichkeit bietet, in einem oder mehreren Datenbanken zu recherchieren. Die Erfindung ermöglicht somit, aufgrund des Analyse- und Verknüpfungerzeugungsschritt über die ergänzten Verknüpfungsinformationen bzw. "Datensatzketten" einen Kontext bzw. Zusammenhang über mehrere Datensätze aus bevorzugt mehreren Datenquellen zu schaffen. Die Erfindung ermöglicht daher dem informationssuchenden Benutzer durch das Ergänzen von nebeneinanderstehenden Datensätzen durch Verknüpfungsinformationen, sich an einer beliebigen Stelle innerhalb einer Datenkette einklinken zu können und diese zur systematische Aktionsprozessunterstützung nutzen können.

Gemäß einer bevorzugten Ausführungsform der Erfindung werden in dem Erfassungsschritt die Datensätze anhand eines "query-mode"-Befehls aus der Datenquelle erfaßt. Hierbei werden im wesentlichen alle Datenbestandteile eines jeden Datensatzes aus der Datenquelle erfaßt bzw. heruntergeladen, und zwar unabhängig von Formatierung, Inhalt, usw.

Bevorzugt umfaßt das Verfahren weiterhin einen Schritt des Konvertierens der erfaßten Datensätze in ein Zielformat, wobei der Analyseschritt bevorzugt anhand der nicht konvertierten Datensätze vorgenommen wird. Die Konversion in ein Zielformat ermöglicht insbesondere eine einfache und bevorzugt einheitliche Darstellung der Datensätze z.B. bei einer Anzeige des Datensatzes an einen Benutzer.

Weiterhin bevorzugt wird in dem Konvertierungsschritt der Datensatz in ein einheitliches, für Web-browser verarbeitbares bzw. lesbares Zielformat, z.B. ein HTML-, SGML- oder XML-Format, konvertiert. Die Benutzung eines für Web-browser verarbeitbares Zielformat ermöglicht vorteilhaft die Benutzung von in Computer gängigen Programmen (z.B. von dem Netscape- oder Explorer-Browser oder jeden anderen Browser) zur Darstellung, Verknüpfung und/oder Suche von Datensätzen, so daß eine weitere Installierung eines besonderen Programms vorteilhafterweise entfallen kann.

Weiterhin bevorzugt wird in dem Konvertierungsschritt eine Anordnung der in den erfaßten Datensätze enthaltenen Informationen bzw. Daten im wesentlichen beibehalten und es werden lediglich Formatierungsbefehle des Zielformats eingesetzt bzw. ergänzt und/oder ersetzt. Durch Beibehaltung im wesentlichen aller erfaßten Daten bzw. Informationen innerhalb des konvertierten Datensatzes ist ein Daten- bzw. Informationsverlust vorteilhaft vermieden.

Am bevorzugtesten werden in dem Konvertierungsschritt in den Datensätzen enthaltene graphische Komponenten entweder in ein bevorzugt von Web-browsern verarbeitbares Datenformat konvertiert oder es wird auf ein Originalformat der graphischen Komponenten verwiesen, bevorzugt wenn eine zumindest teilweise Konvertierung nicht möglich ist.

Gemäß einer weiteren bevorzugten Ausführungsform der Erfindung weist der Analyseschritt einen Schritt der Erfassung zumindest eines kontextgenerierenden Zusammenhangs auf, wobei die Bestimmung der Zuordnungsinformation anhand des kontextgenerierenden Zusammenhangs vorgenommen wird, wobei in dem Erfassungsschritt der kontextgenerierende Zusammenhang bevorzugt aus einer Zusammenhangsdatenbank bzw.- tabelle bzw. -matrix bzw. -datei entnommen wird. Es ist somit möglich anhand von vorbestimmten bzw. vorbestimmbaren kontextgenerierenden Zusammenhängen eine Zuordnungsinformation zu ermitteln, welche den inhaltlichen Zusammenhang einer Vielzahl von Datensätzen reflektiert, z.B. aussagt, daß zwei Veröffentlichungen inhaltlich zusammenhängen oder daß zwei Patentanmeldungen den gleichen Gegenstand betreffen usw. Die Zuordnungsinformation dient insbesondere der Ermittlung bzw. Erstellung der Verknüpfungsinformation in dem nachfolgenden Erzeugungsschritt, wobei jeder Datensatz in dem Ergänzungsschritt um die entsprechende Verknüpfungsinformation ergänzt wird.

Weiterhin bevorzugt wird die in dem Erzeugungsschritt erzeugte Verknüpfungsinformation in einem Verknüpfungsinformationsspeicher gespeichert. Es ist daher der (auch spätere) Zugriff auf die gespeicherte Verknüpfungsinformation vorteilhaft möglich.

Gemäß einer weiteren bevorzugten Ausführungsform weist die in dem Erzeugungsschritt erzeugte Verknüpfungsinformation eine Verweisliste auf, welche eine Vielzahl von zueinander passenden Datensätzen enthält bzw. in Beziehung zueinander setzt. Es ist somit vorteilhaft anhand der Verweisliste möglich, alle in Zusammenhang mit einem Datensatz stehende Datensätze zu erhalten.

Bevorzugt weist die in dem Erzeugungsschritt erzeugte Verknüpfungsinformation eine einen Link, bevorzugt einen HTML-Hyperlink auf zumindest einen weiteren Datensatz auf. Ein Benutzer kann sich somit z.B. durch Anklicken des Hyperlinks in einem ersten Datensatz zu einem zweiten mit dem ersten inhaltlich verbundenen zweiten Datensatz springen und z.B. den Inhalt des zweiten Datensatzes anschauen. Dieser Vorgang kann bevorzugt mehr als einmalig stattfinden und gegebenenfalls rekursiv sein, d.h. es können Schleifen vorhanden sein, welche z.B. variabel oder auch innerhalb eines Datensatzes definiert sind.

Am bevorzugtesten werden die einzelnen Schritte iterativ für Datensätze aus einer Vielzahl von Datenquellen durchgeführt. Es ist somit möglich, die Datensätze aus einer Vielzahl von Datenquellen miteinander zu verknüpfen ohne die Datensätze z.B. in einer neuen Datenbank aufnehmen zu müssen. Auch ist es möglich, die Datensätze delokalisiert gespeichert zu lassen, z.B. auf getrennten Servern, auf denen die entsprechenden Datensätze zum Zugriff freigegeben werden.

Weiterhin bevorzugt umfaßt das weiterhin einen Schritt des Anzeigens der Verknüpfungsinformation an zumindest einen Benutzer. Somit kann ein Benutzer sich zusammenhängende Datensätze über die in die jeweiligen Datensätze eingefügten Verknüpfungsinformationen nach und nach anzeigen lassen.

Weiterhin bevorzugt wird in dem Schritt des Anzeigens der Verknüpfungsinformation eine Auswahl von anzuzeigenden Verknüpfungsinformationen anhand eines benutzerspezifischen Profils vorgenommen. Es ist daher vorteilhaft möglich, anhand von benutzerspezifischen Profilen Datensätze zu selektieren oder außer Acht zu lassen, wobei z.B. auch innerhalb von neuronalen Netzwerken erstellte Profile verwendet werden können. So kann z.B. dynamische Konzepte einer Autonomy® -Anwendung für den jeweiligen Benutzer erstellt werden und für die Auswahl verwendet werden.

Am bevorzugtesten erfolgt das Erfassen der Vielzahl von Datensätzen aus zumindest einer delokalisierten Datenquelle, und zwar über ein bi- oder multidirektionales Netz, insbesondere über Internet. Es ist daher vorteilhaft möglich, die einzelnen Datensätze delokalisiert zu speichern bzw. gespeichert zu lassen und lediglich über die darin enthaltenen Verknüpfungsinformationen miteinander zu verknüpfen.

Gemäß der Erfindung wird weiterhin ein Computerprogrammprodukt zum automatischen bzw. dynamischen Verknüpfen von Datensätzen aus zumindest einer Datenquelle bereitgestellt, welches Programmteile zur Durchführung eines erfindungsgemäßen Verfahrens aufweist.

Gemäß der Erfindung wird weiterhin eine Vorrichtung zum automatischen Verknüpfen von Datensätzen aus zumindest einer Datenquelle bereitgestellt, welche umfaßt:
eine Einrichtung zum Erfassen einer Vielzahl von Datensätzen aus zumindest einer Datenquelle;
eine Einrichtung zum Analysieren der erfaßten Datensätze anhand von innerhalb der Datensätze enthaltenen Daten bzw. Informationen zur Bestimmung zumindest einer Zuordnungsinformation;
eine Einrichtung zum Erzeugen zumindest einer Verknüpfungsinformation auf der Grundlage der Zuordnungsinformation; und
eine Einrichtung zum Ergänzen des Datensatzes um die zumindest eine Verknüpfungsinformation.

Gemäß der Erfindung wird weiterhin ein System zum Abrufen von verknüpften Datensätzen aus zumindest einer Datenquelle bereitgestellt, welches einen zumindest einem Benutzer zugeordneter Rechner bzw. Computer und einen Anschluß zum Zugreifen auf zumindest einen Datenspeicher, in dem Datensätze gespeichert sind, welche mittels eines erfindungsgemäßen Verfahrens, mittels eines erfindungsgemäßen oder mittels einer erfindungsgemäßen Vorrichtung verknüpft sind, aufweist.

Gemäß einer bevorzugten Ausführungsform der Erfindung der Zugriff über ein bi- oder multidirektionales Netz, insbesondere über das Internet.

Weitere Merkmale, Aufgaben und Vorteile der vorliegenden Erfindung werden aus der folgenden beispielhaften Beschreibung bevorzugter Ausführungsformen der Erfindung mit Bezug auf die Zeichnung ersichtlich sein, in der:
FIG. 1 ein Beispiel gemäß der Erfindung verknüpfter Datensätze zeigt;
FIG. 2 eine Prinzipskizze der Erfassung von Datensätzen gemäß einer bevorzugten Ausführungsform der Erfindung zeigt;
FIG.3 ein Beispiel eines Teils einer Datenspezifikation von der Derwent Patent-Datenbank zeigt;
FIG. 4 ein Flußdiagramm der Erfassung von Datensätzen gemäß einer bevorzugten Ausführungsform der Erfindung zeigt;
FIG. 5 einen beispielhaften Aufbau einer Bibliographie-Textdatei aus dem Bereich "Patente" zeigt;
FIG. 6 einen Tel eines beispielhaften Datensatzes von Derwent nach der Konvertierung zeigt;
FIG. 7 ein Flußdiagramm der Analyse von Datensätzen gemäß einer bevorzugten Ausführungsform der Erfindung zeigt; und
FIG. 8 ein Flußdiagramm der Erzeugung zumindest einer Verknüpfungsinformation und Ergänzung des Datensatzes um die Verknüpfungsinformation gemäß einer bevorzugten Ausführungsform der Erfindung zeigt.

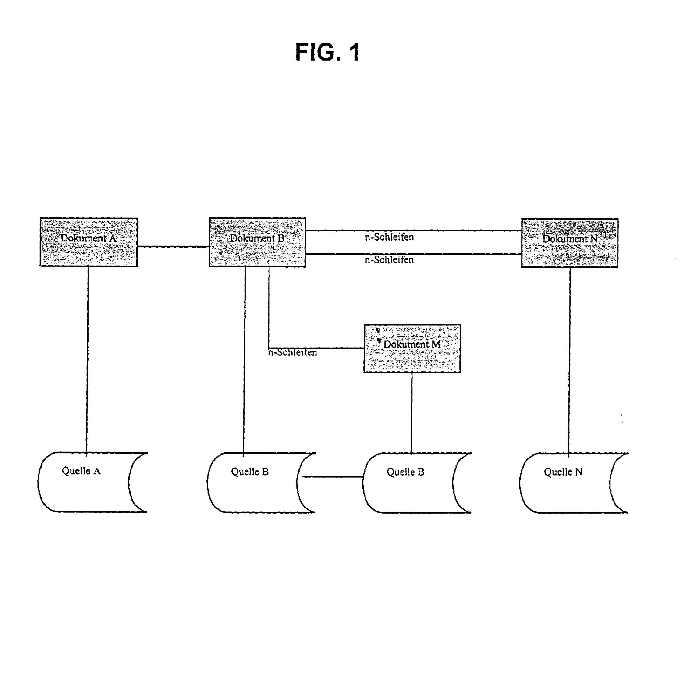

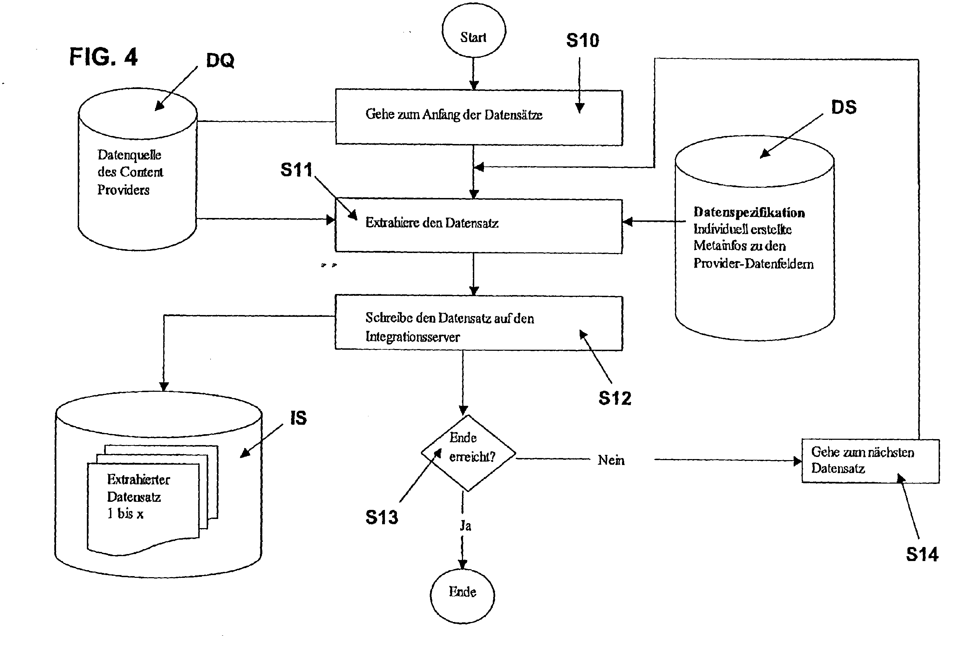

Bei einem Verfahren zum automatischen Verknüpfen von Datensätze aus zumindest einer Datenquelle gemäß einer bevorzugten Ausführungsform der Erfindung werden zunächst eine Vielzahl von Dokumenten als Beispiele für Datensätze aus zumindest einer Datenquelle abgerufen. Dies ist in FIG. 1 mittels der Bereitstellung von den Dokumenten A, B-M, N, usw. aus den Quellen A, B bzw. N, usw. dargestellt. Hierbei werden die Dokumente bevorzugt mittels einer "query-mode"-Abfrage im wesentlichen unverändert aus der Datenquelle heruntergeladen bzw. geladen bzw. eingelesen und zur weiteren Bearbeitung bevorzugt in einem sog. "Integrationsserver" IS (FIG. 4) (zwischen-) gespeichert.

Nachfolgend werden - wie nachfolgend beschrieben werden wird - die erfaßten Datensätze anhand von innerhalb der Datensätze enthaltenen Daten bzw. Informationen zur Bestimmung zumindest einer Zuordnungsinformation bzw. von Zuordnungsdaten analysiert.

Die somit ermittelte Zuordnungsinformation wird verwendet, um nachfolgend zumindest eine Verknüpfungsinformation bzw. Verknüpfungsdaten zu erzeugen bzw. zu generieren, wobei hierbei die Zuordnungsinformation als Grundlage dient. Wenn die Zuordn-ungsinformation z.B. die Zusammengehörigkeit der Dokumente A und B anzeigt, z.B. indem in einer Verweisliste der Zuordnungsinformation des Dokuments A das Dokument B enthalten ist, so wird in dem Verknüpfungsinformationserzeugungsschritt eine Verknüpfung z.B. in Form eines HTML- *(Hypertext Markup Language-)* Hyperlinks vom Dokument A zum Dokument B erzeugt. Denkbar sind jedoch auch andere Formate. Die somit erzeugten Verknüpfungen bzw. Verknüpfungsinformationen sind in FIG. 1 durch Pfeile dargestellt, die zwischen den einzelnen Dokumenten angeordnet sind. Hierbei ist es denkbar, daß die Verknüpfungen auch als eine Schleife angeordnet sind, d.h. das nach n Verknüpfungen zu dem Ausgangsdokument verwiesen wird. Weiterhin sind ausgehend von einem Datensatz bzw. Dokument (im Beispiel Dokument B) auch mehrere Verknüpfungen gleichzeitig möglich (z.B. zum Dokument M und N ausgehend vom gleichen Dokument B). In anderen Worten können die Verknüpfungen sowohl seriell als auch parallel vorgesehen sein.

Die somit erzeugten Verknüpfungsdaten bzw. -informationen werden dann in den Datensatz eingefügt, so daß dieser Datensatz um die zumindest eine Verknüpfungsinformation bzw. -befehl bzw. datenbestandteil bzw. -verweis ergänzt ist.

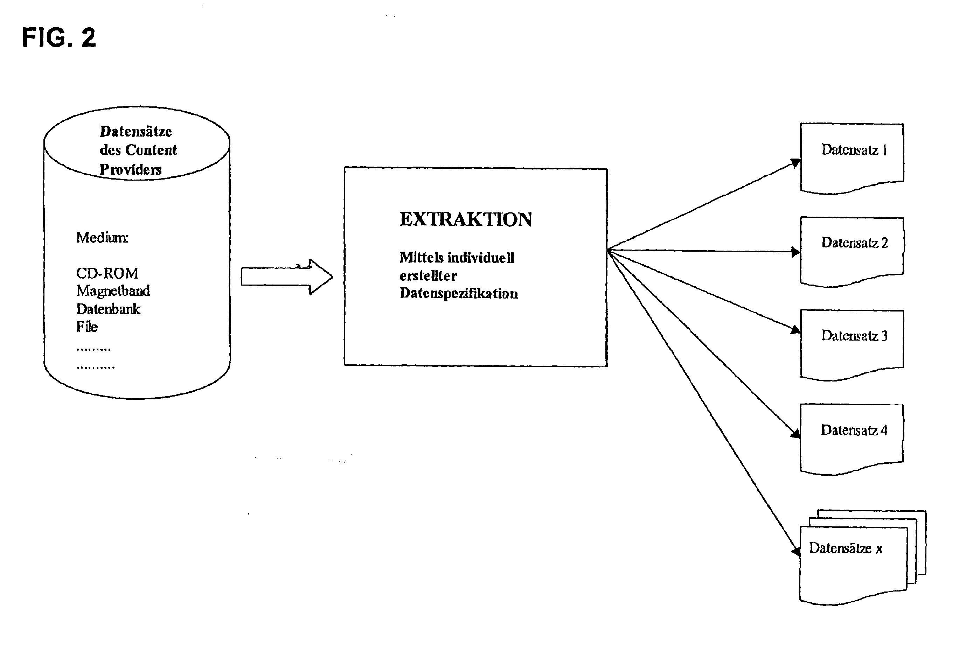

Nachfolgend wird die Erfassung bzw. Extraktion der Datensätze aus einer oder mehreren Datenquellen mit Bezug auf FIG. 2 bis 5 näher beschrieben.

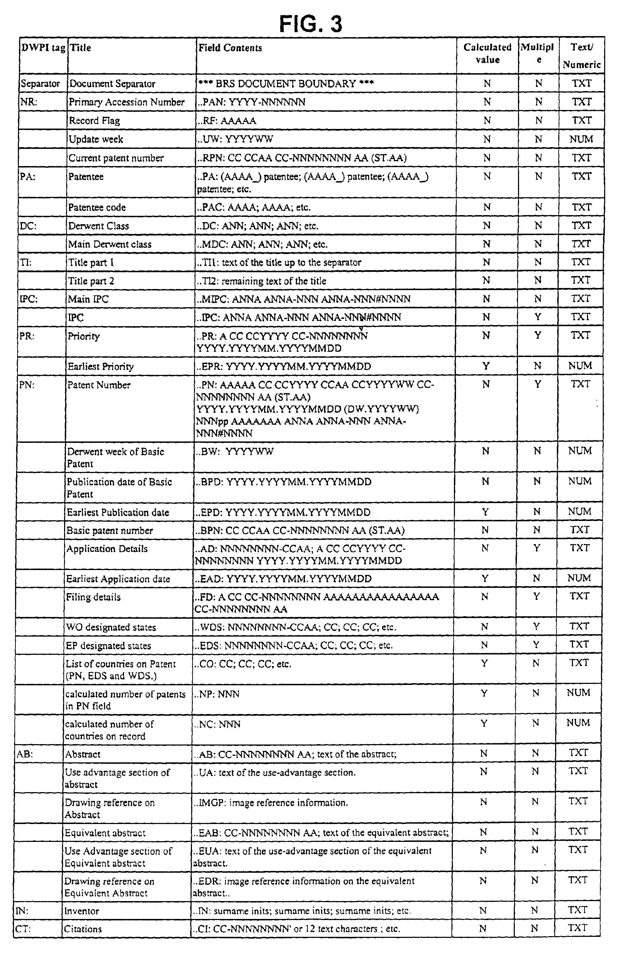

Wie aus der Prinzipskizze von FIG. 2 ersichtlich ist, werden die Datensätze durch einen Provider bzw. Datenbereitsteller in Form z.B. von CD-ROMS, Magnetbändern, Datenbanken, Files, Internet-zugreifbaren Datenbeständen usw. bereitgestellt. Diese Vielzahl von Datensätzen eines oder mehrerer Provider wird anhand individuell erstellter Datenspezifikationen extrahiert bzw. erfaßt. Die Datenspezifikationen weisen bevorzugt Metainformationen zu einzelnen Datenfelder des jeweiligen Datensatzes auf, wobei die Metainformationen Datenquellen-spezifisch unterschiedlich sein können und entsprechend der Datenquelle erstellt bzw. erfaßt werden müssen. Die Datenspezifikationen bzw. Metainformationen wie Name eines Datenfeldes, Format der Daten, Feldlänge eines jeden gelieferten Feldes usw. sind als Vorbereitung für die Extraktion von Bedeutung. Die Datenspezifikationen können entweder durch den Provider selbst oder alternativ systemintern vorgesehen werden. In FIG. 3 ist ein Beispiel eines Teils einer Datenspezifikation von der Derwent Patent-Datenbank dargestellt. Wie ersichtlich, enthalten die Datenspezifikationen z.B. die Art bzw. das Datenformat der in einem Feld enthaltenen Information bzw. Daten (z.B. dem "DWPI-tag"-Feld "PA" entspricht der Name des Patentinhabers im Text-Format). Aufgrund der erfaßten bzw. ermittelten Datenspezifikation kann ein Skript erstellt werden, daß für weitere mit gleichen oder ähnlichen Datenspezifikationen vorgesehene Datensätze herangezogen wird.

Die Erfassung der Datensätze aus zumindest einer Datenquelle eines Providers erfolgt gemäß einer bevorzugten Ausführungsform wie in FIG. 4 dargestellt. In Schritt S10 geht die Routine zum Anfang der Datensätze bzw. Providerdaten. Hierbei wird auf eine vorbestimmte bzw. vorbestimmbare Datenquelle DQ des Providers zugegriffen und in Schritt S11 ein erster Datensatz bevorzugt in einem "query mode" extrahiert bzw. geladen bzw. runtergeladen bzw. erfaßt. Hierbei kommt die der Datenquelle bzw. dem jeweiligen Datensatz entsprechende Datenspezifikation zum Einsatz, welche bevorzugt in einer Datenspezifikationsdatenbank DS gespeichert ist. Der somit erfaßte Datensatz wird in Schritt S12 in einen Integrationsserver IS geschrieben und hier zumindest zwischengespeichert. In Schritt S14 wird abgefragt, ob der letzte Datensatz erfaßt wurde. Wenn das Ende der Datensätze erreicht wurde (JA in Schritt S13), ist die Erfassung der Datensätze abgeschlossen. Wenn hingegen das Ende der Datensätze noch nicht erreicht wurde (NEIN in Schritt S13), wird in Schritt S14 zum nächsten Datensatz übergegangen, indem ein Datensatzzähler inkrementiert wird, und die Routine extrahiert in Schritt S11 den nachfolgenden Datensatz.

Dieser Vorgang wird für alle, in die Datensatzkette bzw. Informationskette zu integrierenden Datenquellen durchgeführt, so dass nach Abschluss ein neu gewonnener kompletter Datenbestand von Datensätzen aus allen Datenquellen unterschiedlicher Datenlieferanten bzw. -provider vorliegt.

Anhand zweier Datenpools von Datensätzen (Offenlegungs- und Patentschriften) des Europäischen Patentamts als Datenprovider, soll dieses Vorgehen exemplarisch beschrieben werden.

Die vom Europäischen Patentamt in Europa veröffentlichten Offenlegungen und Patente liegen im Volltext und als Bilddatensatz in einer der drei europäischen Amtssprachen englisch, französisch oder deutsch vor. Der Volltext lieget in einer abgewandelten SGML-Form vor und ist recherchierbar. Der Bilddatensatz entspricht der amtlich veröffentlichten Originalfassung und ist z.B. im PDF-Format *(Portable Data Format)* bereitgestellt. Bei Patentschriften liegen die Ansprüche in allen drei europäischen Amtssprachen vor.

Der Contentprovider liefert für europäische Schutzrechtsveröffentlichungen Datenfelder, deren Inhalte im Textmodus alle recherchiert werden können:
- Offenlegungs- bzw. Patentnummer
- Prioritätsangaben
- Publikationsdatum
- Anmelder
- Erfinder
- Titel
- Abstract
- Beschreibung
- Ansprüche
- Internationale Patentklassifikation
- Veröffentlichte Länder

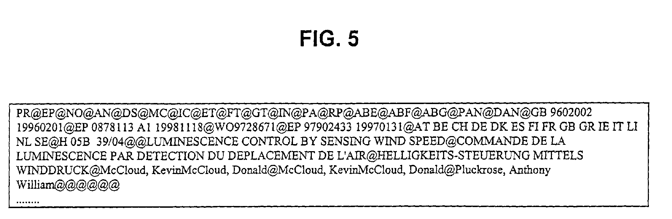

Dieser Inhalt der Datensätze wird von der Datenbank des Europäischen Patentamts erfaßt und wird wie in FIG. 5 dargestellt in dem Integrationsspeicher bzw. Integrationsserver IS (zwischen-) gespeichert. Die erste Zeile enthält, jeweils durch "@" getrennt, die Kürzel der angegebenen Felder. Alle weiteren Zeilen enthalten jeweils die Informationen eines Patents. Die Felder hierbei sind wiederum durch "@" getrennt, wobei der Typ der Felder sich aus den Felddefinitionen der ersten Zeile ergibt. Das Feld "EP" als Schlüsselinformation trägt demnach den Wert "EP 0878113 A1 19981118"

Für den zweiten Datenpool des Europäischen Patentamts wird der Vorgang ebenso praktiziert. Der Bildformat - Datensatz bekommt ebenso eine individuelle und eindeutige Kennzeichnung und wird für den nächsten Arbeitsschritt vorgehalten.

Werden zu einem Bildformat teilbibliographische Daten mitgeliefert (sie entsprechen einem recherchierbaren Textfeld), so entspricht die Extraktion dem Vorgehen bei Textdaten, wobei ein oder mehrere nicht recherchierbare Felder mit Bilddaten belegt werden.

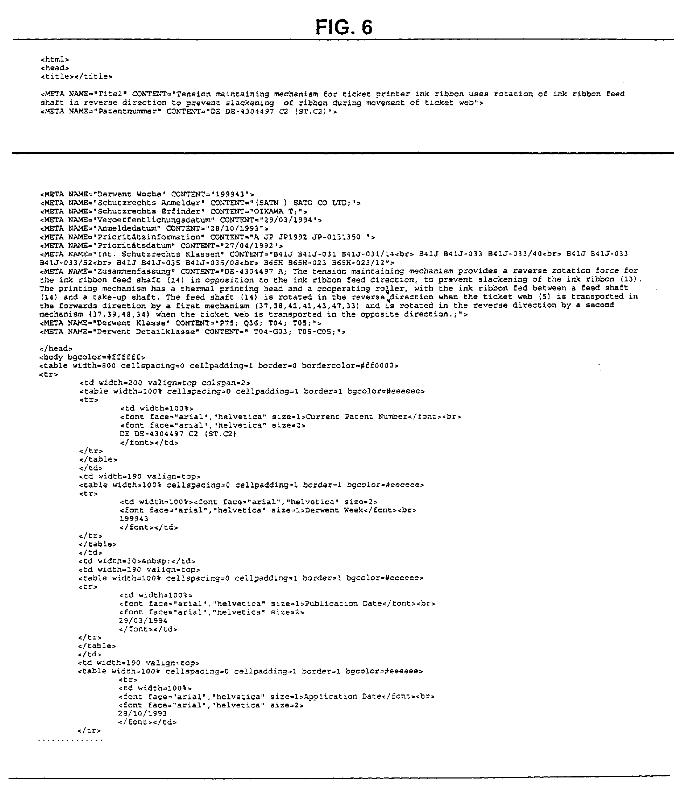

Nachfolgend wird die Konvertierung bzw. Vereineinheitlichung der erfaßten Datensätze in ein Zielformat mit Bezug auf FIG. 6 beschrieben. Die aus den verschiedenen Datenquellen erfaßten Datensätze können unterschiedliche Formate aufweisen. Es ist vorteilhaft, diese unterschiedlichen Formate zu einem zumindest teilweise einheitlichen Zielformat zu konvertieren. Das Zielformat für alle Datenbestände ist ein einheitliches, für Web-Browser verarbeitbares Format, z.B. ein HTML-Format. Denkabr sind jedoch auch ein SGML- oder XML- (*Extended Markup Language-)* Format oder jedes andere zur Darstellung von Texten und/oder Graphiken geeignete Formate. Enthaltene Bilder bzw. Graphiken werden soweit möglich ebenfalls in ein einheitliches webfähiges Datenformat konvertiert bzw. auf die Originalformate verwiesen, falls eine Konvertierung nicht möglich ist. In FIG. 6 ist ein Tel eines beispielhaften Datensatzes von Derwent nach der Konvertierung im HTML-Format als Zielformat dargestellt.

Nachfolgend wird die Analyse der Datensätze näher erläutert.

Aus den im Konvertierungsschritt vereinheitlichten Datensätzen können bevorzugt schon im Vorfeld kontextgenerierende Zusammenhänge manuell und/oder automatisch identifiziert werden. An den Datensätzen des Europäischen Patentamts lässt sich dies beispielhaft genauer erläutern:

Ein Mitarbeiter einer Forschungsabteilung hat eine Innovation beim Europäischen Patentamt angemeldet. Bis zur ersten Veröffentlichung der Patentanmeldung vergehen mehrere Monate. In Fachzeitschriften publiziert dieser Forscher unter seinem Namen über seine Erfindung. Das Unternehmen veröffentlicht auf der eigenen Homepage zu erwartende Produkte, die mit dieser Erfindung zusammenhängen. Auch nach der Offenlegung der Patentanmeldung liefern verschiedenste Dienstleister Informationen, die mit dieser Erfindung in Zusammenhang stehen. Ein bestimmter Provider übersetzt die ursprüngliche Sprache der Patentanmeldung in einen in einheitlichem in englisch verfassten Abstract. Ein weiterer kontrolliert die Rechtsstände in den einzelnen Mitgliedsstaaten, die in der Patentanmeldung benannt sind. Ein weiterer Anbieter arbeitet in Verbindung mit vielen weiteren veröffentlichten Patenten, Zusammenhänge und Patentfamilien heraus. Aus diesen Veröffentlichungen erstellt ein weiterer Provider graphische Darstellungen der Zusammenhänge und Ausprägungen der Innovation. Zusätzlich zu diesen im Umfeld des ursprünglichen Schutzrechts entstandenen Zusatzinformationen kommt die ursprüngliche Information, d.h. die Offenlegung bzw. Patentveröffentlichung des Europäischen Patentamts.

All diese Informationen haben bestimmte Merkmale gemeinsam: Den Namen des Mitarbeiters, den Namen des Unternehmens, die Bezeichnung der Erfindung, die Nummer des Schutzrechts, das Datum der Anmeldung usw.

Ein Zusammenhang oder mehrere dieser Zusammenhänge stellt bzw. stellen für die Analyse eine oder mehrere Zuordnungsinformationen dar, die technisch umgesetzt bzw. implementiert werden, um eine Datensatzkette zu erstellen.

Innerhalb des technischen Analyseschrittes wird der identifizierte (vorbestimmte bzw. vorbestimmbare) kontextgenerierende Zusammenhang aus dem Datensatz gelesen bzw. erfaßt und innerhalb des Analyseprozesses in einem Zuordnungsspeicher als Zuordnungsinformation festgehalten bzw. (zwischen-) gespeichert. Dieser kontextgenerierende Zusammenhang bzw. diese Zuordnungsinformation dient im weiteren Ablauf dazu, entsprechend geeignete Informationen zur Verknüpfung innerhalb anderer Datensätze bzw. Datenquellen zu identifizieren und der festgehaltenen Zuordnungsinformation aus dem Ursprungsdatensatz bzw. - datenquelle zuzuordnen. Welche Datensätze aus welchen Datenquellen wie miteinander zu verknüpfen sind hängt von der Definition des kontextgenerierenden Zusammenhang und somit von der erfaßten Zuordnungsinformation ab. Der zugrundeliegende Ablauf bleibt jedoch unabhängig von der konkreten Auswahl des kontextgenerierenden Zusammenhangs bzw. der erfaßten Zuordnungsinformation.

Nach Bestimmung des kontextgenerierenden Zusammenhangs und erfassen der Zuordnungsinformation des ersten Datensatzes werden die weiteren Datensätze durchsucht, und die der Zuordnungsinformation entsprechenden Datensätze aufgrund des kontextgenerierenden Zusammenhangs ermittelt. Die zusammengehörigen bzw. als zu einer selben Datensatzkette gehörend ermittelten Datensätze werden in einr Verweisliste aufgenommen. Hierbei wird bevorzugt eine die jeweiligen Datensätze eindeutig kennzeichnende Informationen in die Verweisliste aufgenommen. Die Verweisliste setzt somit alle zueinander passenden Informations- bzw. Datensätze bzw. -blöcke, die ermittelt worden sind, in Beziehung zueinander und stellt somit die Basis für den in den folgenden Schritten vorzunehmenden Verknüpfungen der Datensätze durch Ergänzen von zumindest einer Verknüpfungsinformation in den eigentlichen Datensätzen dar.

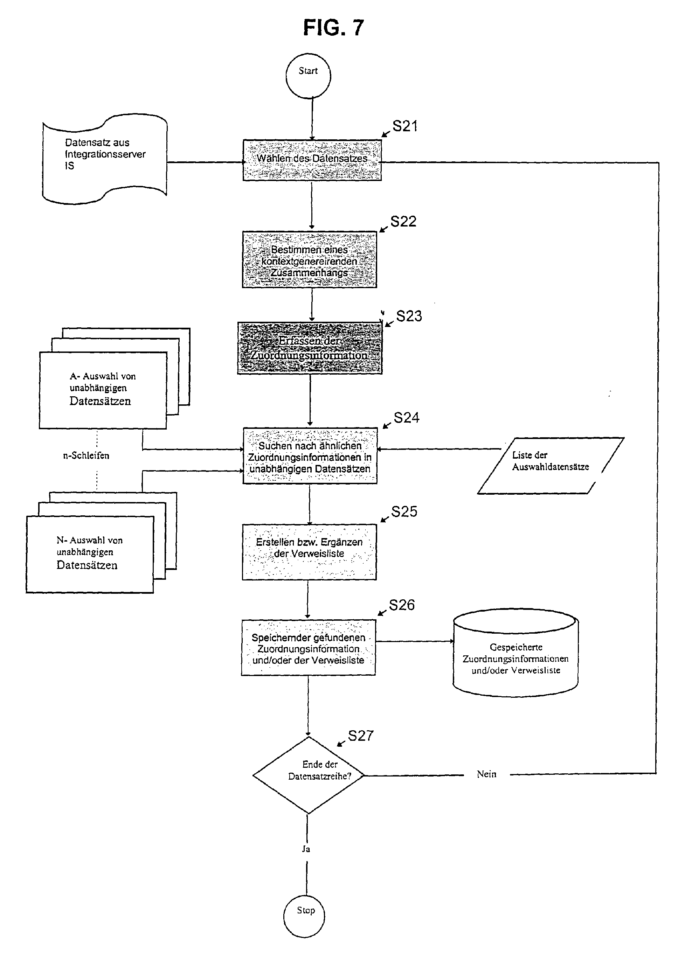

Die Analyseroutine wird beispielhaft mit Bezug auf FIG. 7 beschrieben. In Schritt S21 wird ein Datensatz ausgewählt und bevorzugt aus dem Integrationsserver IS erfaßt. In Schritt S22 wird der kontextgenerierende Zusammenhang (z.B. Name des Erfinders) erfaßt und die entsprechende Zuordnungsinformation (z.B. "Michael Müller") wird in Schritt S23 aus dem Datensatz gelesen. Dann wird in Schritt S24 nach der gleichen (z.B. "Michael Müller") oder ähnlichen (z.B. "M. Müller") Zuordnungsinformation in anderen Datensätzen gesucht, und zwar bevorzugt in einer oder mehreren Auswahlen von Datensätzen aus einer Liste von Auswahldatensätzen, welche bevorzugt aus dem Integrationsserver IS eingelesen werden. Dieser Vorgang kann iterativ über eine Vielzahl von Datensätzen, insbesondere aus einer Vielzahl von Datenquellen, durchgeführt werden. In Schritt S25 wird dann eine Verweisliste entweder erstellt, wenn eine solche für die entsprechende Zuordnungsinformation bzw. Datensatzkette noch nicht vorhanden ist, oder, falls eine solche schon vorliegt, um einen entsprechenden Verweis auf einen aufgefundenen als zur Datensatzkette gehörenden Datensatz ergänzt. In Schritt S26 wird die gefundene Zuordnungsinformation und/oder die entsprechende Verweisliste (zwischen-) gespeichert. In Schritt S27 wird überprüft, ob die Datensatzreihe abgeschlossen ist. Ist dies der Fall (JA in Schritt S27), ist die Analyse der Datensäzue abgeschlossen. Ist dies nicht der Fall (NEIN in Schritt S27), wird ein nächster Datensatz gewählt und mit Schritt S21 fortgefahren.

Die in FIG. 7 dargestellte Routine kann iterativ über mehrere Datensatzbestände z.B. aus mehreren Datenquellen durchgeführt werden, mit dem Ziel mehrstufige Datensatzketten zu erzeugen. Hierbei sind der Ausgangspunkt und das Ende einer zu identifizierenden Datensatzkette frei wählbar. Somit sind vorwärts- und rückwärts Verkettungen durch entsprechende Verknüpfungsinformationen möglich.

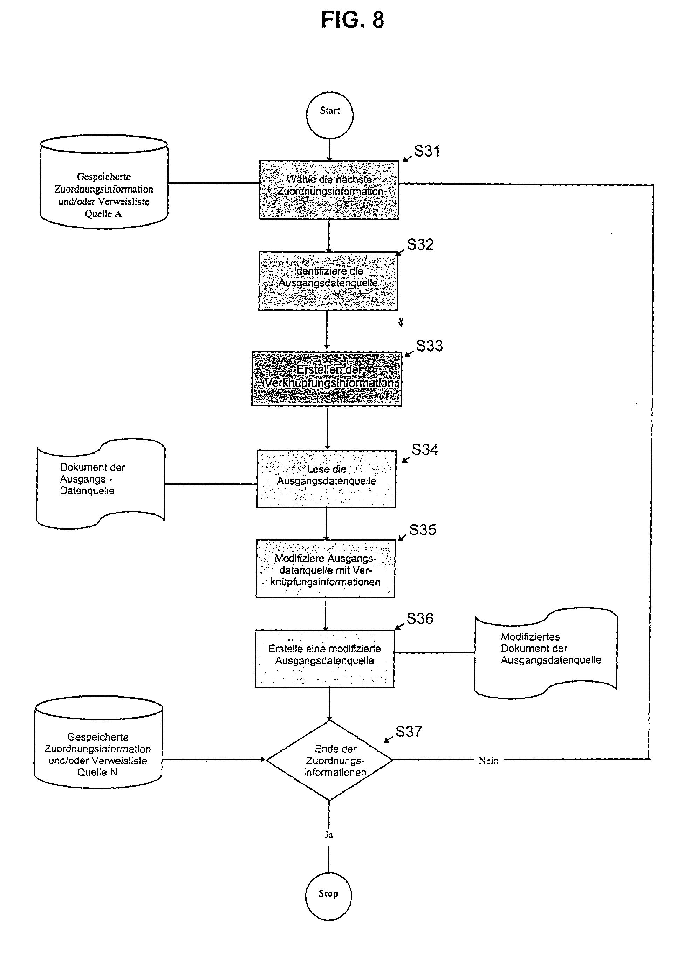

Nachfolgend wird die Erzeugung und Ergänzung der Verknüpfungsinformation mit Bezug auf FIG. 8 näher beschrieben.

Die in der Analyseroutine gemäß FIG. 7 erzeugte und (zwischen-) gespeicherte Zuordnungsinformation bzw. Verweisliste wird in Schritt S31 eingelesen. Hieraus wird in Schritt S32 die Ausgangsdatenquelle ermittelt, d.h. diejenige Datenquelle, aus der der entsprechende Datensatz erfaßt wurde. Dann wird in Schritt S33 eine Verknüpfungsinformation bevorzugt als HTML-Hyperlink erzeugt, d.h. ein Pointer bzw. Verweis auf den entsprechenden Datensatz in der entsprechenden Datenquelle generiert, welcher eine unmittelbare Verknüpfung auf diesen Datensatz entspricht. Hierbei handelt es sich nicht um einen in einer Datenbank aufzunehmender Verweis, sondern um eine in den Datensatz einsetzbarer Befehl, welcher ein "Springen" zu dem entsprechenden Datensatz ermöglicht, bevorzugt ohne Zugriff auf eine weitere Datenbank. Die Verknüpfungsinformation kann somit auch die entsprechende URL-(*Uniform Resourse Locator*-) Information bzw. Adresse enthalten, soweit es sich um einen Zugriff über das Internet handelt.

In Schritt S34 wird der Ausgangsdatensatz z.B. als Dokument der Ausgangsdatenquelle gelesen und die in Schritt S33 erzeugte bzw. generierte Verknüpfungsinformation wird in Schritt S35 in den Datensatz eingesetzt bzw. eingefügt, d.h. der Datensatz wird um die Verknüpfungsinformation ergänzt.

In Schritt S37 wird überprüft, ob alle in dem Analyseschritt erzeugten Zuordnungsinformationen abgearbeitet wurden. Ist dies der Fall (JA in Schritt S37), so ist die Verknüpfung der Datensätze beendet. Sind hingegen noch nicht alle Zuordnungsinformationen abgearbeitet (NEIN in Schritt S37), so wird die nächste Zuordnungsinformation gewählt und mit Schritt S31 fortgefahren.

Der Prozess der Verkettung ist ein Vorgang, der dahingehend umgekehrt werden kann, daß auch eine Rückwärtsverkettung stattfindet. In anderen Worten kann von einem Dokument A auf ein Dokument B über die Verknüpfungsinformation in dem Dokument A verwiesen werden, jedoch kann das Dokument B ebenfalls eine Verknüpfung mit dem Dokument A enthalten, so daß der Benutzer die Datensatzkette auch wieder rückwärts durchlaufen kann. Bei Benutzung eines webfähigen (z.B. HTML-) Formats für Datensätze und Verknüpfungsinformation kann für die Rückwärtsverkettung jedoch auch die Web-Applikation (z.B. Rückwärts-Button des Webbrowsers) verwendet werden.

Die Verknüpfung wird anschließend an die Analyse bevorzugt einmal für alle Dokumente aller Datenquellen durchgeführt. Es ist ebenso möglich, diesen Vorgang nicht abzuspeichern und vorzuhalten, sondern in Echtzeit durchzuführen. Als Ergebnis liegen bei beiden Vorgehens weisen modifizierte Dokumente vor, in deren nicht abgeänderten redaktionellen Inhalten, Verknüpfungsinformationen und Verbindungen eingefügt wurden.

Über die Nutzung dieser in den Datensätzen eingefügten bzw. enthaltenen Verknüpfungsinformationen als Querverweise kann nun auf eine Informations- bzw. Datensatzkette vorwärts bzw. rückwärts zugegriffen werden. Jede genutzte Verbindung führt zu einem inhaltsähnlichen oder an die Inhalte des vorhergehenden Datensatzes anknüpfender bzw. vorbereitender Datensatz.

Die Datensatzkette ist beliebig erweiterbar und besteht im Minimum aus zwei miteinander verknüpften Datensätzen bzw. Dokumenten zumindest einer Inhaltsquelle.

Verschiedenen Datensatzketten sind nun möglich:
- Innerhalb eines Datensatzes A einer Quelle A werden verschiedenen Stellen verkettet bzw. über die Verknüpfungsinformation verknüpft bzw. verwiesen.
- Innerhalb von Datensätzen A bis N einer Datenquelle A werden Stellen miteinander verkettet.
- Innerhalb von Datensätzen A bis N verschiedener Datenquellen A bis N werden Stellen miteinander verknüpft.
- Innerhalb von Datensätzen A bis N verschiedener Datenquellen A bis N werden Stellen mehrmals verknüpft, so dass durch die Verknüpfung eine oder mehrere Schleifen entstehen können.

Weiterhin kann ein Anzeigeschritt an einen Benutzer vorgesehen sein. In diesem Anzeigeschritt kann eine benutzerspezifische Auswahl der anzuzeigenden Verknüpfungen des Datensatzes vorgesehen sein. Hierbei kommen bevorzugt Benutzerprofile zum Einsatz, die z.B. über eine Autonomy®-Applikation generiert werden. So können insbesondere Kontexte von Autonomy® verwendet werden, um die Interessen des Benutzers zu ermitteln und somit nicht interessierende Verknüpfungen auszuschließen bzw. nicht anzuzeigen.

Es können z.B. Konzept-Agenten zum Einsatz kommen, die durch die DRE™ (Dynamic Reasoning Engine™) erstellt bzw. abgelegt werden, die einen bestimmten Text- bzw. Befehlskorpus analysiert. Ein solcher Korpus kann ein einzelner "Übungssatz" sein, der eigens zur Schulung des Agenten dient, oder aber ein vollständiges Dokument oder eine Auswahl von Dokumenten bzw. Datensätzen. Der Agent analysiert diesen Quelltext bzw. diesen Datensatz und bestimmt die Muster der wichtigsten Ideen darin. Zur Feinabstimmung der Beziehungen und der Gewichtungen der Themen innerhalb eines Agenten kann der Benutzer diesem zusätzliche Texte zur Analyse übergeben. Der Agent nimmt dann die notwendigen Verschiebungen des Schwerpunkts vor. Konzepte, die im ursprünglichen Quelltext behandelt wurden, jedoch in den zusätzlichen Texten und Befehlen nicht zur Sprache kommen, erhalten dann weniger Betonung oder fallen sogar ganz heraus. Dieses Nachtrainieren ist wichtig, weil es die Treffsicherheit des Konzept-Agenten verbessert. Agenten arbeiten dann besonders effizient, wenn sie spezifisch auf ein bestimmtes Thema ausgerichtet sind. Deshalb bestehen typische Anwendungen aus Gruppen von mehreren Konzept-Agenten, die jeweils auf einen einzelnen Benutzer abgestimmt sind. Die Anzahl der Konzept-Agenten, die jeder Benutzer für sich definieren kann, läßt sich je nach Anwendung konfigurieren.

Weiterhin können auch Benutzerprofile von Autonomy® zum Einsatz kommen. Viele der Produkte von Autonomy® richten sich nach den Interessen des Benutzers oder nach Mitarbeiterprofilen, die "empirisch" anhand von Beobachtungen erstellt werden. Zur Bestimmung der Interessen oder der Fachkenntnisse einer Person bzw. Benutzers nutzt die Software die Mustererkennungstechnologie zur Extraktion der Schlüsselideen aus den Artikeln bzw. Datensätzen, die der Betreffende liest, bzw. der Befehle, die der Benutzer eingibt. Die Datensätze (insbesondere die heruntergeladenen Dokumente) dienen dazu, automatisch einen Satz von Konzept-Agenten zu erstellen. Durch die Gewichtung der Häufigkeit des Auftretens bestimmter Themen werden dann die Interessengebiete in die Konzept-Agenten kodiert. Die Profile können vollständig anonym geführt werden, persönliche Angaben sind nicht erforderlich. Bei Bedarf ist es jedoch möglich, die Profile durch bekannte persönliche Informationen zu ergänzen und auf diese Weise den Dienst noch stärker auf die Person zuzuschneiden. In dem Maße, wie ein Benutzer zusätzliche Befehle eingibt oder z.B. Artikel online liest, Material im Intranet veröffentlicht oder Dokumente an das Wissensverwaltungssystem übergibt, aktualisiert das System seine Profile durch Neuberechnen der Interessen. Konzepte, die früher häufig vorkamen, inzwischen jedoch in den Hintergrund getreten sind, werden mit der Zeit ersetzt. Auf diese Weise hält das System Schritt mit den sich ändernden Interessen des Benutzers. Dies ist ein anderes Vorgehen als eine ausdrückliche "Präferenz", die der Benutzer von Hand gelegentlich anpassen muß. Der Benutzer hat die Möglichkeit, Agenten selbst zu erstellen oder sie zu trainieren. Zu diesem Zweck werden Mustertexte (auch als "Übungssätze" bekannt) oder bestehende Dokumente verwendet. Die Software abstrahiert dann die hauptsächlichen Ideen aus dem Text und erstellt einen auf diese Schlüsselideen "trainierten" Agenten. Das Trainieren von Agenten kann durch zusätzliche Texte erfolgen oder durch Hinweise, ähnliches Material zu berücksichtigen oder zu ignorieren. Diese Konzepte können mittels neuronaler Netze auch "trainiert" werden.

## Patentansprüche

1. Verfahren zum automatischen Verknüpfen von Datensätzen aus zumindest einer Datenquelle, welches folgende Schritte umfaßt:
Erfassen einer Vielzahl von Datensätzen aus zumindest einer Daten-quelle;
Analysieren der erfaßten Datensätze anhand von innerhalb der Datensätze enthaltenen Daten zur Bestimmung zumindest einer Zuordnungsinformation;
Erzeugen zumindest einer Verknüpfungsinformation auf der Grundlage der Zuordnungsinformation; und
Ergänzen des Datensatzes um die zumindest eine Verknüpfungsinformation.

2. Verfahren nach Anspruch 1, wobei in dem Erfassungsschritt die Datensätze anhand eines "query-mode"-Befehls aus der Datenquelle erfaßt werden.

3. Verfahren nach einem der vorangehenden Ansprüche, weiterhin umfassend einen Schritt des Konvertierens der erfaßten Datensätze in ein Zielformat, wobei der Analyseschritt bevorzugt anhand der nicht konvertierten Datensätze vorgenommen wird.

4. Verfahren nach Anspruch 3, wobei in dem Konvertierungsschritt der Datensatz in ein einheitliches, für Web-browser verarbeitbares Zielformat konvertiert wird.

5. Verfahren nach Anspruch 3 oder 4, wobei in dem Konvertierungsschritt eine Anordnung der in den erfaßten Datensätze enthaltenen Daten im wesentlichen beibehalten wird und lediglich Formatierungsbefehle des Zielformats eingesetzt bzw. ergänzt und/oder ersetzt werden.

6. Verfahren nach einem der vorangehenden Ansprüche 3 bis 6, wobei in dem Konvertierungsschritt in den Datensätzen enthaltene graphische Komponenten entweder in ein bevorzugt von Web-browsern verarbeitbares Datenformat konvertiert werden oder auf ein Originalformat der graphischen Komponenten verwiesen wird, bevorzugt wenn eine zumindest teilweise Konvertierung nicht möglich ist.

7. Verfahren nach einem der vorangehenden Ansprüche, wobei der Analyseschritt einen Schritt der Erfassung zumindest eines kontextgenerierenden Zusammenhangs aufweist, wobei die Bestimmung der Zuordnungsinformation anhand des kontextgenerierenden Zusammenhangs vorgenommen wird.

8. Verfahren nach Anspruch 6, wobei in dem Erfassungsschritt der kontextgenerierende Zusammenhang aus einer Zusammenhangsdatenbank bzw. -tabelle bzw. - matrix bzw. -datei entnommen wird.

9. Verfahren nach einem der vorangehenden Ansprüche, wobei die in dem Erzeugungsschritt erzeugte Verknüpfungsinformation in einem Verknüpfungsinformationsspeicher gespeichert wird.

10. Verfahren nach einem der vorangehenden Ansprüche, wobei die in dem Erzeugungsschritt erzeugte Verknüpfungsinformation eine Verweisliste aufweist, welche eine Vielzahl von zueinander passenden Datensätzen enthält bzw. in Beziehung zueinander setzt.

11. Verfahren nach einem der vorangehenden Ansprüche, wobei die in dem Erzeugungsschritt erzeugte Verknüpfungsinformation einen Link, bevorzugt einen HTML-Hyperlink auf zumindest einen weiteren Datensatz aufweist.

12. Verfahren nach einem der vorangehenden Ansprüche, wobei die einzelnen Schritte iterativ für Datensätze aus einer Vielzahl von Datenquellen durchgeführt werden.

13. Verfahren nach einem der vorangehenden Ansprüche, weiterhin umfassend einen Schritt des Anzeigens der Verknüpfungsinformation an zumindest einen Benutzer.

14. Verfahren nach Anspruch 13, wobei in dem Schritt des Anzeigens der Verknüpfungsinformation eine Auswahl von anzuzeigenden Verknüpfungsinformationen anhand eines benutzerspezifischen Profils vorgenommen wird.

15. Verfahren nach einem der vorangehenden Ansprüche, wobei das Erfassen der Vielzahl von Datensätzen aus zumindest einer delokalisierten Datenquelle erfolgt, und zwar über ein bi- oder multidirektionales Netz, insbesondere über Internet.

16. Computerprogrammprodukt zum automatischen bzw. dynamischen Verknüpfen von Datensätzen aus zumindest einer Datenquelle, welches Programmteile zur Durchführung eines Verfahrens nach einem der vorangehenden Ansprüche aufweist.

17. Vorrichtung zum automatischen Verknüpfen von Datensätzen aus zumindest einer Datenquelle, welche umfaßt:
eine Einrichtung zum Erfassen einer Vielzahl von Datensätzen aus zumindest einer Datenquelle;
eine Einrichtung zum Analysieren der erfaßten Datensätze anhand von innerhalb der Datensätze enthaltenen Daten zur Bestimmung zumindest einer Zuordnungsinformation;
eine Einrichtung zum Erzeugen zumindest einer Verknüpfungsinformation auf der Grundlage der Zuordnungsinformation; und
eine Einrichtung zum Ergänzen des Datensatzes um die zumindest eine Verknüpfungsinformation.

18. System zum Abrufen von verknüpften Datensätzen aus zumindest einer Datenquelle, welches einen zumindest einem Benutzer zugeordneter Rechner und einen Anschluß zum Zugreifen auf zumindest einen Datenspeicher, in dem Datensätze gespeichert sind, welche mittels einem Verfahren nach einem der Ansprüche 1 bis 15, mittels eines Computerprogramms nach Anspruch 16 oder mittels einer Vorrichtung nach Anspruch 17 verknüpft sind, aufweist.

19. System nach Anspruch 18, wobei der Zugriff über ein bi- oder multidirektionales Netz, insbesondere über das Internet erfolgt.
